# EUROPÄISCHE PATENTSCHRIFT

(11) **EP 3 404 929 B1**
(45) Veröffentlichungstag und Bekanntmachung des Hinweises auf die Patenterteilung: **04.11.2020**
(21) Anmeldenummer: 18163107.8
(22) Anmeldetag: 21.03.2018
(51) Int. Cl.: H04Q 9/00, G01D 18/00, G08C 19/00

(54) **ANZEIGEGERÄT FÜR DIE PROZESSAUTOMATION**
DISPLAY UNIT FOR PROCESS AUTOMATION
APPAREIL D'AFFICHAGE POUR L'AUTOMATISATION DE PROCESSUS

(30) Priorität: 16.05.2017 DE 102017110633
(43) Veröffentlichungstag der Anmeldung: 21.11.2018
(73) Patentinhaber: Krohne Messtechnik GmbH, 47058 Duisburg (DE)
(72) Erfinder: Koch, Christian, 58453 Witten (DE)
(74) Vertreter: Gesthuysen Patent- und Rechtsanwälte

(56) Entgegenhaltungen:
- DE-A1- 19 930 661
- DE-A1-102008 050 354
- DE-A1-102014 009 354

## Beschreibung

Die Erfindung betrifft ein Anzeigegerät für die Prozessautomation. Das Anzeigegerät weist eine Anzeigeeinrichtung, eine Steuerung, eine analoge Stromschleifenschnittstelle und eine digitale Feldbusschnittstelle auf. Dabei ist das Anzeigegerät zur Energieversorgung über die Stromschleifenschnittstelle ausgebildet und ist weiter die Steuerung ausgebildet, ein an der Stromschleifenschnittstelle anliegendes analog codiertes Signal eines Ausgangsdatums einem ersten Eingangsdatum zuzuordnen und das erste Eingangsdatum mit der Anzeigeeinrichtung anzuzeigen.

Ein ähnliches Gerät ist zum Beispiel offenbart im Dokument DE 10 2014 009354 A1.

Die Prozessautomation ist mit der Automatisierung von industriellen Prozessen, wie zum Beispiel Herstellungsprozessen, befasst. Solche Prozesse werden unter anderen durch Aktoren gesteuert und durch Sensoren überwacht. Aktoren sind zum Beispiel Stellenglieder und Ventile und Sensoren sind zum Beispiel Durchfluss-, Füllstands-, Temperatur-, Druck-, Analyse-, Gas- oder Dampfmessgeräte. Analysemessgeräte sind insbesondere solche zur Messung eines pH-Werts, einer Trübung oder einer Leitfähigkeit eines Mediums. Solche Aktoren und Sensoren sind vorzugsweise als Feldgeräte ausgebildet. Feldgeräte weisen grundsätzlich eine Schnittstelle für einen Feldbus auf und sind zur Kommunikation mit einem Steuerungs- und/oder einem Leitsystem über den Feldbus ausgebildet. Somit sind Feldgeräte durch ein Steuerungs- und/oder Leitsystem zentral steuerbar. Erst durch die zentrale Steuerbarkeit von Aktoren und Sensoren ist eine Prozessautomation sinnvoll möglich. Ein Feldbus, sei es ein analoger Feldbus wie die analoge Stromschleife oder ein digitaler Feldbus, benötigt ein Übertragungsmedium, welches vorliegend zumindest einen elektrischen Leiter aufweist. Vorliegend handelt es sich somit um leitungsgebundene Feldbusse.

Ein Ausgangsdatum ist zum Beispiel ein von einem Sensor gemessener Messwert oder ein einem Aktor vorgegebener Stellwert. Ein Ausgangsdatum wird zum Beispiel von einem Feldgerät dadurch in einem analogen Signal codiert, dass das Signal mit einem Parameter erzeugt wird, der einen bestimmten Wert aufweist. Der Wert entspricht dabei per Konvention dem Ausgangsdatum. Bei dem Parameter handelt es sich zum Beispiel um die Größe, die Amplitude oder die Frequenz des Signals. Das Maß für den Wert ist zum Beispiel Spannung oder Strom. Somit sind analog codierte Signale für gewöhnlich wertkontinuierliche Signale und nicht wertdiskrete Signale wie digital codierte Signale.

Stromschleifen können neben der Übertragung von analog codierten Signalen auch zur elektrischen Energieversorgung der in der Stromschleife liegenden Geräte, wie zum Beispiel Feldgeräte und Anzeigegeräte, eingesetzt werden. Die in einer Stromschleife liegenden Geräte sind dabei grundsätzlich elektrisch in Reihe mit der Stromschleife geschaltet. Entsprechend ist das Anzeigegerät auch zur Energieversorgung über die Stromschleifenschnittstelle ausgebildet. Das bedeutet, dass das Anzeigegerät über die Stromschleifenschnittstelle die Energie erhält, die es zum Betrieb benötigt.

Zum Beispiel weist eine Stromschleife als analoger Feldbus einen Sensor als Feldgerät und ein Anzeigegerät auf, welches über seine analoge Stromschleifenschnittstelle mit der Stromschleife verbunden ist. Im Betrieb misst das Feldgerät einen Messwert als Ausgangsdatum und führt die analoge Codierung des Ausgangsdatums durch die Erzeugung eines elektrischen Signalstroms, dessen Größe per Konvention dem Messwert entspricht, aus. Die Übertragung des Ausgangsdatums über den Feldbus erfolgt durch eine Einprägung des Signalsstroms auf den Feldbus durch das Feldgerät. Die Steuerung des Anzeigegeräts ist ausgebildet, dieses analog codierte Signal des Ausgangssignals einem ersten Eingangsdatum zuzuordnen, welches im Idealfall dem Ausgangsdatum entspricht. Da der Prozess der analogen Codierung eines Ausgangsdatums in einem analogen Signal insbesondere aufgrund von Toleranzen bei der Herstellung von Feldgeräten und äußeren Störeinflüssen auf Feldgeräte von Ungenauigkeiten gekennzeichnet ist, entspricht oftmals das erste Eingangsdatum nicht dem Ausgangsdatum und weicht das erste Eingangsdatum vom Ausgangsdatum um eine Abweichung ab, die oftmals für die Anwendung, in welcher ein Feldgerät eingesetzt wird, nicht tolerierbar ist.

Eine Aufgabe dieser Erfindung ist deshalb die Angabe eines Anzeigegeräts, welches zur Überwachung von an der Stromschleifenschnittstelle anliegenden analog codierten Signalen ausgebildet ist.

Die dargelegte Aufgabe ist bei einem Anzeigegerät zunächst und im Wesentlichen dadurch gelöst, dass die Steuerung ausgebildet ist, über die Feldbusschnittstelle die Übertragung des Ausgangsdatums in Form eines digital codierten Signals anzufordern, das digital codierte Signal über die Feldbusschnittstelle zu empfangen, dem digital codierten Signal ein zweites Eingangsdatum zuzuordnen, einen Vergleich zwischen dem ersten Eingangsdatum und dem zweiten Eingangsdatum durchzuführen und ein Ergebnis des Vergleichs über die Anzeigeeinrichtung anzuzeigen.

In Bezug auf das eingangs genannte Beispiel einer Stromschleife mit einem Feldgerät und einem Anzeigegerät bedeutet das, dass sowohl das Anzeigegerät als auch das Feldgerät neben jeweils einer Stromschleifenschnittstelle auch jeweils eine Feldbusschnittstelle aufweisen. Im Betrieb wird die Steuerung des Anzeigegeräts dann über die Feldbusschnittstelle ein digital codiertes Signal eines Datums an das Feldgerät übertragen, in welchem die Übertragung des Ausgangsdatums in Form eines digital codierten Signals von dem Feldgerät zu dem Anzeigegerät angefordert wird. Das Feldgerät wird dann das digital codierte Signal des Ausgangsdatums zum Anzeigegerät übertragen, das Anzeigegerät wird das digital codierte Signal über die Feldbusschnittstelle empfangen und dem digital codierten Signal ein zweites Eingangsdatum zuordnen. Dann wird die Steuerung einen Vergleich zwischen dem ersten Eingangsdatum und dem zweiten Eingangsdatum durchführen. Die Ausführungen zu diesem Beispiel sind auch im Allgemeinen gültig.

Wenn das Ergebnis des Vergleichs der Steuerung ist, dass das zweite Eingangsdatum und das erste Eingangsdatum gleich sind, dann bedeutet das, dass der Prozess der analogen Codierung exakt war. Wenn das Ergebnis des Vergleichs ist, dass eine Abweichung des ersten Eingangsdatums vom zweiten Eingangsdatum besteht, dann bedeutet das, dass der Prozess der analogen Codierung nicht exakt war. In diesem Fall bewertet die Steuerung vorzugsweise, ob die Abweichung größer ist als eine in der Steuerung gespeicherte Grenzabweichung. Das Ergebnis dieses Vergleichs wird dann über die Anzeigeeinrichtung angezeigt, wodurch das analog codierte Signal überwacht ist. Aufgrund der Natur der digitalen Codierung des zweiten Eingangsdatums wird dieses von der Steuerung als genau angenommen. Somit wird angenommen, dass eine Abweichung des ersten Eingangsdatums vom zweiten Eingangsdatrum einer Abweichung des ersten Eingangsdatums vom Ausgangsdatum entspricht.

Ein Signal, wie zum Beispiel ein analog oder digital codiertes Signal, repräsentiert ein Datum, wie zum Beispiel das Ausgangsdatum, das erste Eingangsdatum und das zweite Eingangsdatum. Dabei ist ein Signal zur Übertragung über einen Feldbus, wie zum Beispiel einem analogen oder digitalen Feldbus, ausgebildet. Ein Datum ist zum Beispiel ein von einem Sensor gemessener pH-Wert, eine gemessene Leitfähigkeit oder eine gemessene Temperatur oder ein Sollwert für einen Aktor oder ein Parameter für ein Feldgerät. Ein analoger Feldbus ist insbesondere die Stromschleife. Vorliegend sind Feldbusse leitungsgebunden und die Signale elektrisch.

In einer Ausgestaltung des Anzeigegeräts ist vorgesehen, dass die Anzeigeeinrichtung zur Anzeige des Ergebnisses des Vergleichs ein Display aufweist. Weiter ist vorgesehen, dass das Display und die Steuerung ausgebildet sind, das erste Eingangsdatum und das zweite Eingangsdatum gleichzeitig auf dem Display anzuzeigen. Durch das gleichzeitige Anzeigen sowohl des ersten Eingangsdatums als auch des zweiten Eingangsdatums auf dem Display ist unmittelbar zum einen die Höhe der Abweichung und zum anderen die Richtung der Abweichung des ersten Eingangsdatums vom zweiten Eingangsdatum ersichtlich. Die Höhe der Abweichung ist insbesondere ein Maß dafür, ob die Abweichung für die jeweilige Anwendung noch akzeptabel ist oder ob Maßnahmen gegen die Abweichung zu ergreifen sind. Sind Maßnahmen zu ergreifen, so ist die Richtung der Abweichung bei der Fehlerdiagnose hilfreich.

In einer weiteren Ausgestaltung des Anzeigegeräts ist vorgesehen, dass die Anzeigeeinrichtung Leuchtmittel mit unterschiedlichen Leuchtfarben aufweist. Weiter ist die Steuerung ausgebildet, die Leuchtmittel zur Anzeige des Ergebnisses des Vergleichs anzusteuern. Als Leuchtmittel werden vorzugsweise Leuchtdioden verwendet. Eine Leuchtdiode wird auch kurz als LED bezeichnet. Zum Beispiel ist vorgesehen, dass die Anzeigeeinrichtung und somit auch die Steuerung gemäß der NAMUR-Empfehlung 107 ausgebildet ist. Diese Ausbildung erfolgt zum Beispiel, indem die Anzeigeeinrichtung eine gelbe Leuchtdiode und eine rote Leuchtdiode aufweist und die Steuerung ausgebildet ist, die gelbe Leuchtdiode dann anzusteuern, wenn die Abweichung zwischen dem ersten Eingangsdatum und dem zweiten Eingangsdatum kleiner als eine Grenzabweichung ist, und die rote Leuchtdiode dann anzusteuern, wenn die Abweichung größer ist als die Grenzabweichung. Die Grenzabweichung trennt dabei einen Bereich, in dem eine Spezifikation nicht eingehalten wird (gelbe LED) von einem Bereich, in dem ein Fehler vorliegt (rote LED).

In einer weiteren Ausgestaltung ist vorgesehen, dass das Anzeigegerät einen elektrischen Schnittstellenanschluss für einen elektrischen Feldbus aufweist und dass die elektrische Stromschleifenschnittstelle und die elektrische Feldbusschnittstelle mit dem Schnittstellenanschluss elektrisch verbunden sind. Somit sind die Stromschleifenschnittstelle und die Feldbusschnittstelle elektrisch parallel zum Schnittstellenanschluss geschaltet. Damit weist das Anzeigegerät eine minimal mögliche Anzahl an elektrischen Anschlüssen auf.

In einer weiteren Ausgestaltung ist vorgesehen, dass die Stromschleifenschnittstelle ausgebildet ist, Signale als Einheitsstromsignale zu codieren und/oder zu decodieren und auch zu übertragen. Einheitsstromsignale sind in der DIN IEC 60381-1 normiert.

In einer weiteren Ausgestaltung ist vorgesehen, dass die Feldbusschnittstelle ausgebildet ist, Signale gemäß einem HART-Standard zu codieren und/oder zu decodieren und auch zu übertragen. Vorzugsweise ist die Feldbusschnittstelle zusätzlich für den Multi-Drop-Betrieb ausgebildet, sodass eine Kommunikation nicht nur mit einem, sondern auch mit mehreren Feldgeräten möglich ist.

In einer weiteren Ausgestaltung ist vorgesehen, dass das Anzeigegerät neben der Stromschleifenschnittstelle eine weitere Stromschleifenschnittstelle aufweist. Die Steuerung ist zum Beispiel ausgebildet, ein an der weiteren Stromschleifenschnittstelle anliegendes analog codiertes Signal eines weiteren Ausgangsdatums einem weiteren Eingangsdatum zuzuordnen und das weitere Eingangsdatum über die Anzeigeeinrichtung anzuzeigen.

In einer weiteren Ausgestaltung ist vorgesehen, dass das Anzeigegerät mindestens ein Relais aufweist und die Steuerung zur Ansteuerung des mindestens einen Relais ausgebildet ist. Ein Relais ist zum Beispiel ein elektromagnetisch betätigter Schalter oder ein Halbleiterschalter, welcher auch als Halbleiterrelais bezeichnet wird. Ein Relais weist für gewöhnlich einen ersten elektrischen Relaiskontakt und einen zweiten elektrischen Relaiskontakt auf, wobei der erste und der zweite Relaiskontakt in Abhängigkeit der Ansteuerung des Relais durch die Steuerung entweder elektrisch miteinander kurzgeschlossen oder elektrisch voneinander getrennt sind.

In einer Weiterbildung der vorangehenden Ausgestaltung ist vorgesehen, dass die Steuerung ausgebildet ist, einen Zustand des mindestens einen Relais in der Anzeigeeinrichtung anzuzeigen. Ein erster Zustand eines Relais ist zum Beispiel, dass der erste und der zweite Relaiskontakt kurzgeschlossen sind und ein zweiter Zustand ist zum Beispiel, dass der erste und der zweite Relaiskontakt elektrisch voneinander getrennt sind. Wenn die Anzeigeeinrichtung Leuchtmittel mit unterschiedlichen Leuchtfarben aufweist, ist es vorteilhaft, wenn die Steuerung zusätzlich ausgebildet ist, Zustände des mindestens einen Relais, wie zum Beispiel die beschriebenen Zustände, in der Anzeigeeinrichtung durch die Leuchtmittel anzuzeigen.

Wenn das Anzeigegerät mindestens ein Relais aufweist und die Steuerung zur Ansteuerung des mindestens einen Relais ausgebildet ist, ist es darüber hinaus vorteilhaft, wenn die Steuerung zusätzlich ausgebildet ist, einen Zustand des mindestens einen Relais in Abhängigkeit vom Ergebnis des Vergleichs einzustellen. Wenn in der Steuerung zum Beispiel eine für eine Anwendung maximal zulässige Grenzabweichung zwischen dem ersten Eingangsdatum und dem zweiten Eingangsdatum abgespeichert ist, ist es vorteilhaft, einen ersten Zustand des Relais einzustellen, wenn die Abweichung zwischen dem ersten Eingangsdatum und dem zweiten Eingangsdatum kleiner als die Grenzabweichung ist und einen zweiten Zustand des Relais einzustellen, wenn die Abweichung größer ist als die Grenzabweichung. Somit kann das Relais das Ergebnis der Überwachung durch das Anzeigegerät an einen entfernten Empfänger übermitteln. Zusätzlich ist zum Beispiel die Steuerung ausgebildet, den aktuellen Zustand des Relais auch in der Anzeigeeinrichtung anzuzeigen.

In einer weiteren Ausgestaltung ist vorgesehen, dass die Steuerung zur Speicherung und Übertragung von Parametern an ein Feldgerät ausgebildet ist. Zum Beispiel handelt es sich bei diesen Parametern um Parameter, welche die analoge Codierung eines Datum in einem Signal bestimmen. Somit ist es möglich, eine Abweichung zwischen dem ersten Eingangsdatum und dem zweiten Eingangsdatum zu korrigieren.

In einer weiteren Ausgestaltung ist vorgesehen, dass das Anzeigegerät eine Funkschnittstelle für ein Funkmodul aufweist und die Steuerung zur Kommunikation über die Funkschnittstelle ausgebildet ist. Vorzugsweise handelt es sich bei dem Funkmodul um ein Bluetooth-Funkmodul.

Wenn die Steuerung des Anzeigegeräts zur Speicherung und Übertragung von Parametern an ein Feldgerät ausgebildet ist, das Anzeigegerät eine Funkschnittstelle aufweist und die Steuerung auch zur Kommunikation über die Funkschnittstelle ausgebildet ist, ist es weiter vorteilhaft, wenn die Steuerung zusätzlich ausgebildet ist, die Parameter über die Funkschnittstelle zu empfangen. Somit ist es möglich, per Funk Parameter zunächst an das Anzeigegerät zu übertragen, in diesem abzuspeichern und dann an ein Feldgerät oder auch mehrere Feldgerät zu übertragen.

In einer Weiterbildung der vorstehenden Ausgestaltung oder, wenn das Anzeigegerät zumindest eine Funkschnittstelle aufweist und die Steuerung zur Kommunikation über die Funkschnittstelle ausgebildet ist, ist vorgesehen, dass die Steuerung zur Parametrierung über die Funkschnittstelle ausgebildet ist. Dadurch ist es möglich, dass sich die Steuerung selbst über die Funkschnittstelle parametriert.

In einer weiteren Ausgestaltung ist vorgesehen, dass das Anzeigegerät einen Energiespeicher, wie zum Beispiel eine Batterie oder Akkumulator, zur Energieversorgung aufweist. Vorteilhafterweise ist bei dieser Ausgestaltung die Steuerung ausgebildet, dann von der Energieversorgung über die Stromschleifenschnittstelle auf die Energieversorgung durch den Energiespeicher umzuschalten, wenn die Energieversorgung über die Stromschleifenschnittstelle unterbrochen oder nicht ausreichend ist.

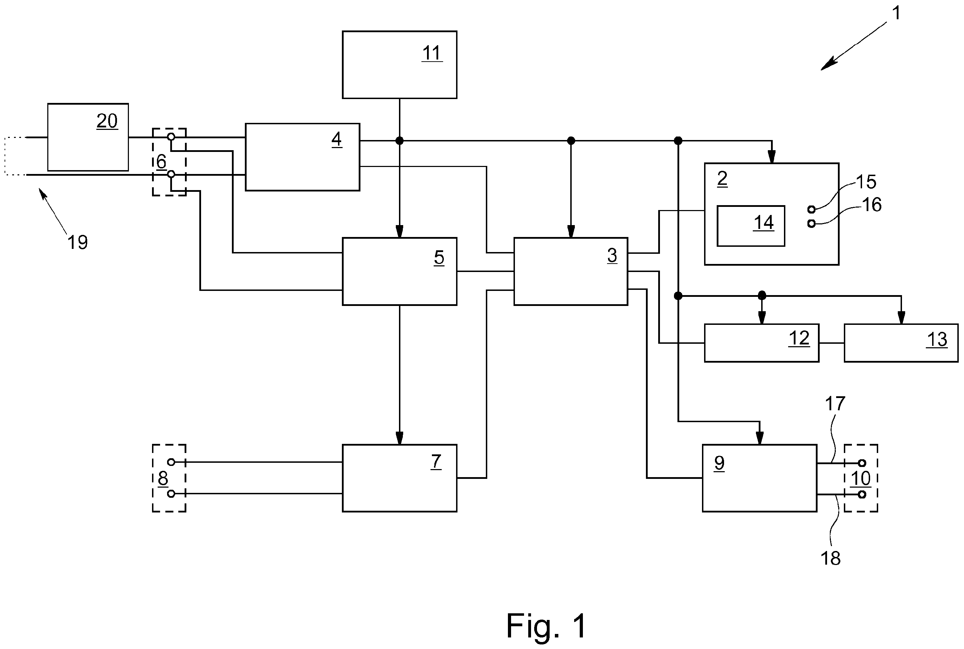

Im Einzelnen ist eine Vielzahl von Möglichkeiten gegeben, das erfindungsgemäße Anzeigegerät für die Prozessautomation auszugestalten und weiterzubilden. Dazu wird verwiesen sowohl auf die dem unabhängigen Patentanspruch nachgeordneten Patentansprüche als auch auf die nachfolgende Beschreibung eines bevorzugten Ausführungsbeispiels in Verbindung mit der Figur.

Die Figur zeigt abstrahiert und schematisch das Anzeigegerät 1 für die Prozessautomation. Das Anzeigegerät 1 weist die Anzeigeeinrichtung 2, die Steuerung 3, die Stromschleifenschnittstelle 4, die Feldbusschnittstelle 5, den Schnittstellenanschluss 6, die weitere Stromschleifenschnittstelle 7, den weiteren Schnittstellenanschluss 8, das Relais 9, den Relaisanschluss 10, eine Batterie als den Energiespeicher 11 und die Funkschnittstelle 12 auf. Die Funkschnittstelle 12 ist mit dem nicht zum Anzeigegerät 1 gehörenden Funkmodul 13 verbunden. Die Anzeigeeinrichtung 2 weist das Display 14, das gelbe Leuchtmittel 15 und das rote Leuchtmittel 16 auf, wobei es sich bei den Leuchtmitteln um LEDs handelt. Das Relais 9 weist den ersten Relaiskontakt 17 und den zweiten Relaiskontakt 18 auf, die mit dem Relaisanschluss 10 elektrisch verbunden sind.

Weiter zeigt die Figur einen Teil der Stromschleife 19 und das mit der Stromschleife elektrisch verbundene Messgerät 20. Das Messgerät 20 ist ein als ein Feldgerät ausgebildeter Sensor und zur Übertragung von Einheitsstromsignalen und gemäß einem HART-Standard ausgebildet. Der Schnittstellenanschluss 6 des Anzeigegeräts 1 ist mit der Stromschleife 19 derart verbunden, dass das Anzeigegerät 1 elektrisch in Reihe mit der Stromschleife 19 liegt.

Das Anzeigegerät 1 ist zur Energieversorgung über die Stromschleifenschnittstelle 4 ausgebildet. Das bedeutet, dass das Anzeigegerät 1 über die Stromschleifenschnittstelle 4, also letztendlich über den Schnittstellenanschluss 6, die Energie aus der Stromschleife 19 erhält, die es zum Betrieb benötigt. Alternativ dazu kann das Anzeigegerät 1 auch aus dem Energiespeicher 11 die Energie erhalten, die es zum Betrieb benötigt. Dabei ist die Steuerung 3 derart ausgebildet, dass von der Versorgung über den Schnittstellenanschluss 6 auf die Versorgung durch den Energiespeicher 11 umgeschaltet wird, wenn die über den Schnittstellenanschluss 6 zugeführte Energie nicht ausreichend für den Betrieb der Anzeigeeinrichtung 1 ist oder der Schnittstellenanschluss 6 von der Stromschleife 19 getrennt wird. Darüber hinaus ist vorgesehen, dass auch der Steuerung 3, zum Beispiel über die Feldbusschnittstelle 5, vorgebbar ist, ob die Versorgung über den Schnittstellenanschluss 6 aus der Stromschleife 19 oder aus dem Energiespeicher 11 erfolgen soll. Über die Stromschleifenschnittstelle 4 bzw. den Energiespeicher 11 werden die Stromschleifenschnittstelle 4 selbst, die Anzeigeeinrichtung 2, die Steuerung 3, die Feldbusschnittstelle 5, das Relais 9, die Funkschnittstelle 12 und das Funkmodul 13 mit elektrischer Energie versorgt. Die Versorgung der weiteren Stromschleifenschnittstelle 7 erfolgt im vorliegenden Ausführungsbeispiel über den weiteren Schnittstellenanschluss 8. Der Energiefluss ist in der Figur durch Linien mit Pfeilspitzen gekennzeichnet.

Nicht nur die Stromschleifenschnittstelle 4, sondern auch die Feldbusschnittstelle 5 ist mit dem Schnittstellenanschluss 6 elektrisch verbunden. Dabei ist die Verbindung der Stromschleifenschnittstelle 4 mit dem Schnittstellenanschluss 6 einerseits und die Verbindung der Feldbusschnittstelle 5 mit dem Schnittstellenanschluss 6 andererseits derart, dass die Stromschleifenschnittstelle 4 und die Feldbusschnittstelle 5 elektrisch parallel zueinander geschaltet sind. Die Stromschleifenschnittstelle 4 und die weitere Stromschleifenschnittstelle 7 sind für Einheitsstromsignale ausgebildet, wohingegen die Feldbusschnittstelle 5 gemäß einem HART-Standard ausgebildet ist. Somit ist das Anzeigegerät 1 ausgebildet, sowohl über die Stromschleifenschnittstelle 4 als auch über die Feldbusschnittstelle 5 mit dem Messgerät 20 zu kommunizieren. Die Stromschleife 19 ist dabei ein leitergebundenes Übertragungsmedium.

Die Steuerung 3 auf der einen Seite und die Anzeigeeinrichtung 2, die Stromschleifenschnittstelle 4, die Feldbusschnittstelle 5, die weitere Stromschleifenschnittstelle 7 und die Funkschnittstelle 12 auf der anderen Seite sind zur Kommunikation miteinander ausgebildet und dazu elektrisch miteinander verbunden. Weiter sind die Funkschnittstelle 12 und das Funkmodul 13 elektrisch miteinander zur Kommunikation verbunden.

Die Steuerung 3 ist ausgebildet und eingerichtet, im Betrieb des Anzeigegeräts 1 das Folgende auszuführen: Sie ordnet ein an der Stromschleifenschnittstelle 4 anliegendes analog codiertes Signal eines Ausgangsdatums einem ersten Eingangsdatum zu. Bei dem Ausgangsdatum handelt es sich in diesem Ausführungsbeispiel um einen Messwert, der vom Messgerät 20 gemessen und als analog codierte Signal auf die Stromschleife 19 ausgegeben worden ist. Bei diesem Signal handelt es sich um ein Einheitsstromsignal. Die Steuerung 3 fordert über die Feldbusschnittstelle 5 dann von dem Messgerät 20 die Übertragung des gleichen Ausgangsdatums in Form eines digitalen codierten Signals an. Das Messgerät 20 codiert das Ausgangsdatum sodann in einem digitalen Signal und gibt es auf der Stromschleife 19 aus. Die Steuerung 3 empfängt das digital codierte Signal über die Feldbusschnittstelle 5 und ordnet dem digital codierten Signal ein zweites Eingangsdatum zu. Somit steht der Steuerung 3 nun das Ausgangsdatum als erstes Eingangsdatum und als zweites Eingangsdatum zur Verfügung. Sie führt weiter einen Vergleich zwischen dem ersten Eingangsdatum und dem zweiten Eingangsdatum durch und zeigt ein Ergebnis des Vergleichs über die Anzeigeeinrichtung 2 an. Die Anzeige des Ergebnisses des Vergleichs erfolgt zum einen über das gleichzeitige Anzeigen sowohl des ersten Eingangsdatums als auch des zweiten Eingangsdatums auf dem Display 14 und zum anderen auch über die Leuchtmittel 15, 16. Zur Anzeige über die Leuchtmittel 15, 16 ist in der Steuerung 3 eine Grenzabweichung gespeichert und ist die Steuerung 3 zur Umsetzung der NAMUR-Empfehlung 107 ausgebildet. Ist die Abweichung zwischen dem ersten Eingangsdatum und dem zweiten Eingangsdatum kleiner als die Grenzabweichung, steuert die Steuerung 3 das gelbe Leuchtmittel 15 an, und ist die Abweichung größer als die Grenzabweichung, steuert die Steuerung 3 das rote Leuchtmittel 16 an. Somit kann ein Bediener anhand der Leuchtmittel ohne Weiteres erkennen, ob die Kommunikation über analog codierte Signale noch ausreichend genau ist, also die Abweichung kleiner als die Grenzabweichung ist, oder nicht, also die Abweichung größer als die Grenzabweichung ist.

Darüber hinaus steuert die Steuerung 3 das Relais 9 derart an, dass der Zustand des Relais 9 das Ergebnis des Vergleichs darstellt. Dabei kann das Relais einen ersten und eine zweiten Zustand einnehmen. Der erste Zustand ist dadurch gekennzeichnet, dass der erste Relaiskontakt 17 und der zweite Relaiskontakt 18 elektrisch kurzgeschlossen sind und der zweite Zustand ist dadurch gekennzeichnet ist, dass der erste Relaiskontakt 17 und der zweite Relaiskontakt 18 voneinander elektrisch getrennt sind. Dem ersten Zustand ist die Bedeutung zugeordnet, dass die Abweichung kleiner ist als die Grenzabweichung und dem zweiten Zustand ist die Bedeutung zugeordnet, dass die Abweichung größer ist als die Grenzabweichung. Eine Abweichung, die gleich der Grenzabweichung ist, wird grundsätzlich als eine Abweichung betrachtet, die kleiner als die Grenzabweichung ist. Das Relais 9 ermöglicht damit die Übermittlung des Ergebnisses des Vergleichs an einen entfernten Empfänger, der an den Relaisanschluss 10 angeschlossen ist.

Darüber hinaus ist die Steuerung 3 zur Speicherung von Parametern für Feldgeräte und auch zur Übertragung dieser Parameter an Feldgeräte, wie zum Beispiel das Messgerät 20 im vorliegenden Ausführungsbeispiel, ausgebildet. Die Steuerung 3 ist weiter ausgebildet, sowohl Parameter für Feldgeräte als auch Parameter für die eigene Steuerung 3 zur Parametrierung über die Funkschnittstelle 12 zu empfangen. Dazu ist auch die Funkschnittstelle 12 zur Kommunikation mit dem Funkmodul 13 ausgebildet. Stellt die Steuerung 3 zum Beispiel fest, dass die Abweichung größer als die Grenzabweichung ist, so überträgt die Steuerung 3 Parameter an das Messgerät 20, um die Abweichung zu kompensieren.

### Bezugszeichen

- 1: Anzeigegerät
- 2: Anzeigeeinrichtung
- 3: Steuerung
- 4: Stromschleifenschnittstelle
- 5: Feldbusschnittstelle
- 6: Schnittstellenanschluss
- 7: weitere Stromschleifenschnittstelle
- 8: weiterer Schnittstellenanschluss
- 9: Relais
- 10: Relaisanschluss
- 11: Energiespeicher
- 12: Funkschnittstelle
- 13: Funkmodul
- 14: Display
- 15: gelbes Leuchtmittel
- 16: rotes Leuchtmittel
- 17: erster Relaiskontakt
- 18: zweiter Relaiskontakt
- 19: Stromschleife
- 20: Messgerät

## Patentansprüche

1. Anzeigegerät (1) für die Prozessautomation mit einer Anzeigeeinrichtung (2), einer Steuerung (3), einer Stromschleifenschnittstelle (4) und einer Feldbusschnittstelle (5),
wobei das Anzeigegerät (1) zur Energieversorgung über die Stromschleifenschnittstelle (4) ausgebildet ist und
wobei die Steuerung (3) ausgebildet ist, ein an der Stromschleifenschnittstelle (4) anliegendes analog codiertes Signal eines Ausgangsdatums einem ersten Eingangsdatum zuzuordnen und das erste Eingangsdatum über die Anzeigeeinrichtung (2) anzuzeigen,
**dadurch gekennzeichnet,**
**dass** die Steuerung (3) ausgebildet ist,
- über die Feldbusschnittstelle (5) die Übertragung des Ausgangsdatums in Form eines digital codierten Signals anzufordern,
- das digital codierte Signal über die Feldbusschnittstelle (5) zu empfangen,
- dem digital codierten Signal ein zweites Eingangsdatum zuzuordnen,
- einen Vergleich zwischen dem ersten Eingangsdatum und dem zweiten Eingangsdatum durchzuführen und
- ein Ergebnis des Vergleichs über die Anzeigeeinrichtung (2) anzuzeigen.

2. Anzeigegerät (1) nach Anspruch 1, **dadurch gekennzeichnet, dass** die Anzeigeeinrichtung (2) zur Anzeige des Ergebnisses des Vergleichs ein Display (14) aufweist und die Steuerung (3) ausgebildet ist, das erste Eingangsdatum und das zweite Eingangsdatum gleichzeitig auf dem Display (14) anzuzeigen.

3. Anzeigegerät (1) nach Anspruch 1 oder 2, **dadurch gekennzeichnet, dass** die Anzeigeeinrichtung (2) Leuchtmittel (15, 16) mit unterschiedlichen Leuchtfarben aufweist und die Steuerung (3) ausgebildet ist, die Leuchtmittel (15, 16) zur Anzeige des Ergebnisses des Vergleichs anzusteuern.

4. Anzeigegerät (1) nach einem der Ansprüche 1 bis 3, **dadurch gekennzeichnet, dass** das Anzeigegerät (1) einen Schnittstellenanschluss (6) für einen Feldbus aufweist und dass die Stromschleifenschnittstelle (4) und die Feldbusschnittstelle (5) mit dem Schnittstellenanschluss (6) verbunden sind.

5. Anzeigegerät (1) nach einem der Ansprüche 1 bis 4, **dadurch gekennzeichnet, dass** die Stromschleifenschnittstelle (4) für Einheitsstromsignale ausgebildet ist.

6. Anzeigegerät (1) nach einem der Ansprüche 1 bis 5, **dadurch gekennzeichnet, dass** die Feldbusschnittstelle (5) gemäß einem HART-Standard ausgebildet ist.

7. Anzeigegerät (1) nach einem der Ansprüche 1 bis 6, **dadurch gekennzeichnet, dass** das Anzeigegerät (1) eine weitere Stromschleifenschnittstelle (7) aufweist.

8. Anzeigegerät (1) nach einem der Ansprüche 1 bis 7, **dadurch gekennzeichnet, dass** das Anzeigegerät (1) mindestens ein Relais (9) aufweist und die Steuerung (3) zur Ansteuerung des mindestens einen Relais (9) ausgebildet ist.

9. Anzeigegerät (1) nach Anspruch 8, **dadurch gekennzeichnet, dass** die Steuerung (3) ausgebildet ist, einen Zustand des Relais (9) in der Anzeigeeinrichtung (2) anzuzeigen.

10. Anzeigegerät (1) nach Anspruch 8 oder 9, **dadurch gekennzeichnet, dass** die Steuerung (3) ausgebildet ist, einen Zustand des mindestens einen Relais (9) in Abhängigkeit des Ergebnisses des Vergleichs einzustellen.

11. Anzeigegerät (1) nach einem der Ansprüche 1 bis 10, **dadurch gekennzeichnet, dass** die Steuerung (3) zur Speicherung und Übertragung von Parametern an ein Feldgerät ausgebildet ist.

12. Anzeigegerät (1) nach einem der Ansprüche 1 bis 11, **dadurch gekennzeichnet, dass** das Anzeigegerät (1) eine Funkschnittstelle (12) für ein Funkmodul aufweist und die Steuerung (3) zur Kommunikation über die Funkschnittstelle (12) ausgebildet ist.

13. Anzeigegerät (13) nach Anspruch 11 und 12, **dadurch gekennzeichnet, dass** die Steuerung (3) ausgebildet ist, die Parameter über die Funkschnittstelle (12) zu empfangen.

14. Anzeigegerät (1) nach Anspruch 12 oder 13, **dadurch gekennzeichnet, dass** die Steuerung (3) zur Parametrierung über die Funkschnittstelle (12) ausgebildet ist.

15. Anzeigegerät (1) nach einem der Ansprüche 1 bis 14, **dadurch gekennzeichnet, dass** das Anzeigegerät (1) einen Energiespeicher (11) zur Energieversorgung aufweist.

## Claims

1. Display device (1) for process automation with a display unit (2), a controller (3), a current loop interface (4) and a fieldbus interface (5),
wherein the display device (1) is designed for power supply via the current loop interface (4) and
wherein the controller (3) is designed to assign an analog coded signal of an output data present at the current loop interface (4) to a first input data and to display the first input data via the display unit (2),
**characterized in**
**that** the controller (3) is designed
- to request the transmission of the output data in the form of a digitally coded signal via the fieldbus interface (5),
- to receive the digitally coded signal via the fieldbus interface (5),
- to assign the digitally coded signal to a second input data,
- to perform a comparison between the first input data and the second input data, and
- to display a result of the comparison via the display unit (2).

2. Display device (1) according to claim 1, **characterized in that** the display unit (2) has a display (14) for displaying the result of the comparison, and the controller (3) is designed to display the first input data and the second input data simultaneously on the display (14).

3. Display device (1) according to claim 1 or 2, **characterized in that** the display unit (2) has light sources (15, 16) with different luminous colors and the controller (3) is designed to control the light sources (15, 16) for displaying the result of the comparison.

4. Display device (1) according to any one of claims 1 to 3, **characterized in that** the display device (1) has an interface terminal (6) for a fieldbus and that the current loop interface (4) and the fieldbus interface (5) are connected to the interface connection (6).

5. Display device (1) according to any one of claims 1 to 4, **characterized in that** the current loop interface (4) is designed for uniform current signals.

6. Display device (1) according to any one of claims 1 to 5, **characterized in that** the fieldbus interface (5) is designed according to a HART standard.

7. Display device (1) according to any one of claims 1 to 6, **characterized in that** the display device (1) has a further current loop interface (7).

8. Display device (1) according to any one of claims 1 to 7, **characterized in that** the display device (1) has at least one relay (9) and the controller (3) is designed to control the at least one relay (9).

9. Display device (1) according to claim 8, **characterized in that** the controller (3) is designed to display a state of the relay (9) in the display unit (2).

10. Display device (1) according to claim 8 or 9, **characterized in that** the controller (3) is designed to set a state of the at least one relay (9) in dependence on the result of the comparison.

11. Display device (1) according to any one of claims 1 to 10, **characterized in that** the controller (3) is designed to store and to transmit parameters to a field device.

12. Display device (1) according to any one of claims 1 to 11, **characterized in that** the display device (1) has a wireless interface (12) for a wireless module and the controller (3) is designed for communication via the wireless interface (12).

13. Display device (13) according to claim 11 and 12, **characterized in that** the controller (3) is designed to receive the parameters via the wireless interface (12).

14. Display device (1) according to claim 12 or 13, **characterized in that** the controller (3) is designed for parameterization via the wireless interface (12).

15. Display device (1) according to any one of claims 1 to 14, **characterized in that** the display device (1) has an energy storage device (11) for supplying energy.

## Revendications

1. Appareil d'affichage (1) destiné à l'automatisation de processus et comprenant un dispositif d'affichage (2), une commande (3), une interface à boucle de courant (4) et une interface de bus de terrain (5),
l'appareil d'affichage (1) étant conçu pour l'alimentation en énergie par le biais de l'interface à boucle de courant (4) et
la commande (3) étant conçue pour associer un signal codé de manière analogique, appliqué à l'interface à boucle de courant (4), d'une donnée de sortie à une première donnée d'entrée et pour afficher la première donnée d'entrée par le biais du dispositif d'affichage (2),
**caractérisé en ce que**
la commande (3) est conçue pour
- demander la transmission, par le biais de l'interface de bus de terrain (5), de la donnée de sortie sous la forme d'un signal codé numériquement,
- recevoir le signal codé numériquement par le biais de l'interface de bus de terrain (5),
- associer une deuxième donnée d'entrée au signal codé numériquement,
- effectuer une comparaison entre la première donnée d'entrée et la deuxième donnée d'entrée et
- afficher le résultat de la comparaison par le biais du dispositif d'affichage (2).

2. Appareil d'affichage (1) selon la revendication 1, **caractérisé en ce que**, pour afficher le résultat de la comparaison, le dispositif d'affichage (2) comporte un affichage (14) et la commande (3) est conçue pour afficher simultanément la première donnée d'entrée et la deuxième donnée d'entrée sur l'affichage (14).

3. Appareil d'affichage (1) selon la revendication 1 ou 2, **caractérisé en ce que** le dispositif d'affichage (2) comporte des moyens d'éclairage (15, 16) ayant des couleurs d'éclairage différentes et la commande (3) est conçue pour commander les moyens d'éclairage (15, 16) afin d'afficher le résultat de la comparaison.

4. Appareil d'affichage (1) selon l'une des revendications 1 à 3, **caractérisé en ce que** le dispositif d'affichage (1) comporte une borne d'interface (6) destinée à un bus de terrain et **en ce que** l'interface à boucle de courant (4) et l'interface de bus de terrain (5) sont reliées à la borne d'interface (6).

5. Appareil d'affichage (1) selon l'une des revendications 1 à 4, **caractérisé en ce que** l'interface à boucle de courant (4) est conçue pour des signaux de courant standard.

6. Appareil d'affichage (1) selon l'une des revendications 1 à 5, **caractérisé en ce que** l'interface de bus de terrain (5) est conçue selon une norme HART.

7. Appareil d'affichage (1) selon l'une des revendications 1 à 6, **caractérisé en ce que** l'appareil d'affichage (1) comporte une autre interface à boucle de courant (7).

8. Appareil d'affichage (1) selon l'une des revendications 1 à 7, **caractérisé en ce que** l'appareil d'affichage (1) comporte au moins un relais (9) et la commande (3) est conçue pour commander l'au moins un relais (9).

9. Appareil d'affichage (1) selon la revendication 8, **caractérisé en ce que** la commande (3) est conçue pour afficher un état du relais (9) dans le dispositif d'affichage (2).

10. Appareil d'affichage (1) selon la revendication 8 ou 9, **caractérisé en ce que** la commande (3) est conçue pour régler un état de l'au moins un relais (9) en fonction du résultat de la comparaison.

11. Appareil d'affichage (1) selon l'une des revendications 1 à 10, **caractérisé en ce que** la commande (3) est conçue pour mémoriser et transmettre des paramètres à un appareil de terrain.

12. Appareil d'affichage (1) selon l'une des revendications 1 à 11, **caractérisé en ce que** l'appareil d'affichage (1) comporte une interface radio (12) destinée à un module radio et la commande (3) est conçue pour communiquer par le biais de l'interface radio (12).

13. Appareil d'affichage (13) selon les revendications 11 et 12, **caractérisé en ce que** la commande (3) est conçue pour recevoir les paramètres par le biais de l'interface radio (12).

14. Appareil d'affichage (1) selon la revendication 12 ou 13, **caractérisé en ce que** la commande (3) est conçue pour effectuer un paramétrage par le biais de l'interface radio (12).

15. Dispositif d'affichage (1) selon l'une des revendications 1 à 14, **caractérisé en ce que** l'appareil d'affichage (1) comporte un accumulateur d'énergie (11) destiné à l'alimentation en énergie.
